# EUROPÄISCHE PATENTSCHRIFT

(11) **EP 0 712 761 B1**
(45) Veröffentlichungstag und Bekanntmachung des Hinweises auf die Patenterteilung: **08.09.1999**
(21) Anmeldenummer: 95117684.1
(22) Anmeldetag: 09.11.1995
(51) Int. Cl.: B60R 21/16

(54) **Verfahren zum Falten eines Gassackes für ein Fahrzeuginsassen-Rückhaltesystem, Vorrichtung zu seiner Ausführung sowie mittels des Verfahrens erhaltener Gassack**
Folding method of an air bag for a vehicle occupant restraint system, device for performing this method and air bag so obtained
Procédé de pliage d'un coussin d'air pour système de retenue pour occupants de véhicule, dispositif pour l'exécution de ce procédé et coussin d'air ainsi obtenu

(30) Priorität: 15.11.1994 DE 4440844
(43) Veröffentlichungstag der Anmeldung: 22.05.1996
(73) Patentinhaber: TRW Occupant Restraint Systems GmbH & Co. KG, 73551 Alfdorf (DE)
(72) Erfinder: Berti, Dietmar, D-73579 Schechingen (DE)
(74) Vertreter: Degwert, Hartmut, Dipl.-Phys.

(56) Entgegenhaltungen:
- DE-A- 2 251 493
- US-A- 5 022 675
- US-A- 5 240 282
- US-A- 5 290 061
- US-A- 5 425 551

## Beschreibung

Die Erfindung betrifft ein Verfahren zum Überführen eines Gassackes für ein Fahrzeuginsassen-Rückhaltesystem, der im aufgeblasenen Zustand eine dreidimensionale Form aufweist und dessen eine Einlaßöffnung aufweisende Wandung im entleerten Zustand flach ausgebreitet werden kann, in eine an den Innenraum einer für ihn vorgesehenen Aufnahme angepaßte Form.

Die Erfindung betrifft auch eine Vorrichtung zum Ausführen dieses Verfahrens sowie einen mittels des Verfahrens erhaltenen Gassack.

Im Stand der Technik wird der Gassack für ein Fahrzeuginsassen-Rückhaltesystem im allgemeinen manuell gefaltet. Dies geschieht im wesentlichen wie folgt: Der Gassack wird mit einer seine Einlaßöffnung umgebenden Befestigungsplatte an einer entsprechenden Vorrichtung befestigt und in einem entleerten, abgeflachten Zustand auf einer Faltfläche ausgebreitet. Dann werden nacheinander einzeln klappbar an dieser Vorrichtung angebrachte Faltschwerter auf den ausgebreiteten Gassack heruntergeklappt, und der Gassack wird jeweils um eine von diesen Faltschwertern gebildete Faltkante gefaltet. Durch das aufeinanderfolgende Herunterklappen der entsprechenden Faltschwerter und das entsprechende Falten des Gassacks wird der Gassack aus seiner ursprünglichen, ausgebreiteten Form in eine gefaltete Form gebracht, in der er in dem Innenraum einer Aufnahme angebracht werden kann. Nach Beendigung des Faltens werden die Faltschwerter aus dem gefalteten Gassack herausgezogen.

Dieses Verfahren nach dem Stand der Technik, das sowohl für fahrerseitige als auch für beifahrerseitige Gassäcke verwendet werden kann, weist einige Nachteile auf. Zuerst ist die Betätigung der Faltschwerter eine ergonomisch schwierige Tätigkeit. Des weiteren ist mit der Verwendung der Faltschwerter die Gefahr verbunden, daß im Falle einer scharfkantigen Oberfläche der Faltschwerter der Gassack beim Falten beschädigt wird. Schließlich ist ein solches Falten, das ungefähr 20 Faltschritte erfordert, eine zeitaufwendige Operation. Bekannte Faltverfahren erfordern je nach Größe und Anbringungsart des Gassackes Faltzeiten zwischen 2 und 4 Minuten.

Neuerdings werden auch automatische Faltvorrichtungen verwendet, die mit komplizierten dreidimensionalen Faltbewegungen arbeiten, so daß Faltschwerter entfallen. Ungewollte Gewebefalten, die bei einem manuellen Falten von Hand beseitigt werden, werden beim automatischen Falten durch ein Wechselspiel von Druckluft und Vakuum beseitigt. Diese automatischen Faltverfahren können die notwendige Faltzeit allerdings nur geringfügig vermindern; ferner sind aufgrund des komplizierten Bewegungsablaufes beim Falten die Vorrichtungen sehr aufwendig.

Ein Gassack, der zusammengelegt wird, indem einige Bereiche der Wandung des Gassacks zusammengefaltet und andere Bereiche des Gassacks zusammengerollt werden, ist aus der US-A-5 290 061 bekannt. Beim Zusammenlegen dieses Gassacks wird zuerst die untere Hälfte des Gassacks in die obere Hälfte gestülpt. Danach werden die Seitenteile der Wandung nach innen gefaltet oder gerollt, bis der Gassack, in einer Richtung betrachtet, nur noch die Breite der für ihn vorgesehenen Aufnahme hat. Anschließend wird der größere Teil der verbleibenden Wandung des Gassacks in einer zur ersten Richtung senkrechten Richtung eingerollt. Die so entstandene Rolle wird schließlich in der zur Rollrichtung entgegengesetzten Richtung umgeklappt, wodurch sie in der Aufnahme zu liegen kommt. Der restliche Teil der Wandung wird zuletzt von der anderen Seite darübergeklappt.

Aufgabe der Erfindung ist es, die zum Überführen eines Gassackes aus einem ausgebreiteten Zustand in eine an den Innenraum einer Aufnahme angepaßte Form notwendige Bearbeitungszeit wesentlich zu vermindern.

Die Aufgabe der Erfindung wird bei einem Verfahren der eingangs angegebenen Art dadurch gelöst, daß die ausgebreitet gehaltene Wandung an ihrem gesamten Außenumfang beginnend einwärts zur Einlaßöffnung hin eingerollt wird.

Durch die Verwendung einer Rollbewegung anstatt einer Vielzahl von nacheinander erfolgenden Faltungen um je eine gerade Faltlinie kann der gesamte Vorgang im wesentlichen mit einem einzigen Arbeitsschritt ausgeführt werden, was die notwendige Bearbeitungszeit wesentlich vermindert.

Vorzugsweise erfolgt die Einrollbewegung im wesentlichen parallel zur Ebene der ausgebreiteten Wandung.

Es kann vorgesehen sein, daß die Einrollbewegung an einer Umfangsstelle der ausgebreiteten Wandung beginnend im wesentlichen entlang einer Spirallinie fortschreitet.

Es kann auch vorgesehen sein, daß die Einrollbewegung am gesamten Außenumfang beginnend gleichmäßig einwärts fortschreitet.

Vorzugsweise kann die Wandung im Anschluß an das Einrollen zumindest partiell nachgerollt werden.

Gemäß einer bevorzugten Ausführungsform wird der im ausgebreiteten Zustand eine von der Kreisform abweichende Umfangskontur aufweisenden Wandung vor Beginn der Einrollbewegung durch partielles Einrollen des Umfangsrandes eine angenähert kreisförmige Umfangskontur gegeben.

Vorzugsweise wird der eingerollte Gassack in einer Aufnahme abgelegt, so daß er sich nicht wieder entrollen kann.

Ein erfindungsgemäße Vorrichtung zum Ausführen des Verfahrens ist durch eine am Außenumfang der Wandung angreifende Einrolleinrichtung gekennzeichnet, welche die ausgebreitet gehaltene Wandung entlang der Innenfläche eines Führungstrichters zur Einlaßöffnung hin einrollt, und eine Vorschubeinrichtung, welche die Wandung vom Eintrittsende des Führungstrichters axial zu seinem Austrittsende befördert.

Ein erfindungsgemäßer Gassack ist dadurch gekennzeichnet, daß die Wandung ausgehend von ihrem Außenumfang im ausgebreiteten Zustand entlang dem gesamten Außenumfang bis zur Berandung der Einlaßöffnung eingerollt ist.

Die Vorteile und Merkmale der Erfindung ergeben sich insbesondere aus der nachfolgenden Beschreibung, die sich auf die beigefügte Zeichnung bezieht. In dieser zeigen:
- Die Figuren 1a bis 1d schematisch einen Gassack erster Art in vier verschiedenen Schritten des Einrollens jeweils in einem Querschnitt;
- Fig. 2 den Gassack von Fig. 1 in einer Draufsicht;
- Fig. 3 schematisch einen Führungstrichter mit einem darin angeordneten Gassack in vier verschiedenen Schritte des Einrollens; und
- Fig. 4 schematisch einen Gassack zweiter Art in drei verschiedenen Schritten während des Einrollens jeweils in einer Draufsicht.

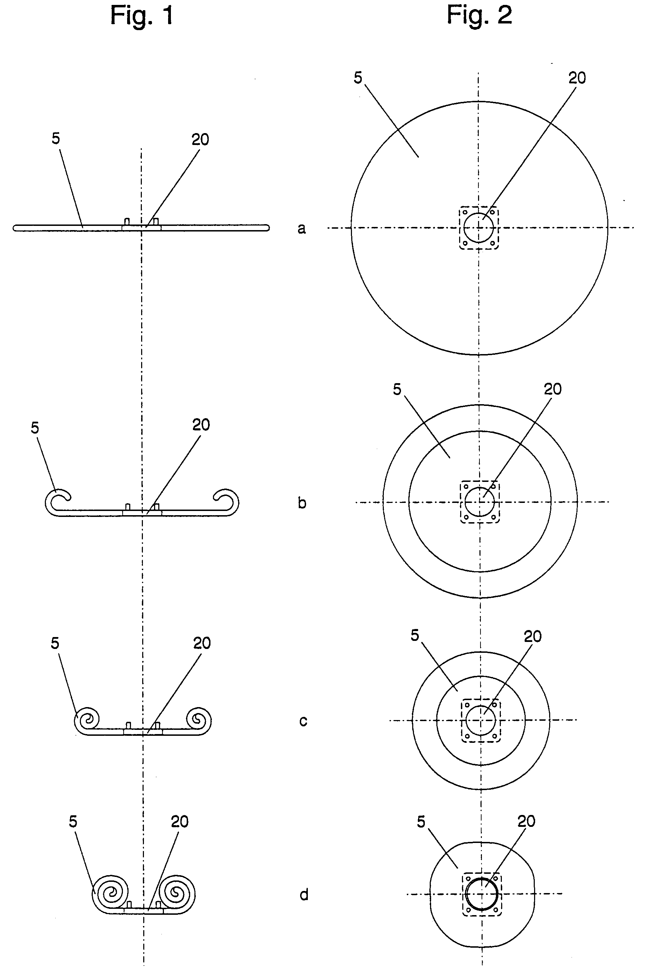

In den Figuren 1 und 2 sind vier verschiedene Schritte des Einrollens eines Gassackes 5 erster Art dargestellt, dessen Wandung mit einer Einlaßöffnung 20 versehen ist. In den Figuren 1a und 2a ist der Gassack 5 in einem entleerten, ausgebreiteten Zustand dargestellt. In den Figuren 1b, 1c sowie 2b, 2c ist der Gassack 5 in teilweise eingerollten Zuständen dargestellt, und in den Figuren 1d und 2d ist der Gassack 5 in seiner fertig gerollten Form dargestellt. Wie in den Figuren 1a bis 1d und 2a bis 2d zu sehen ist, wird der Gassack 5 durch ein fortschreitendes Einrollen der ausgebreitet gehaltenen Wandung an ihrem Außenumfang beginnen einwärts zur Einlaßöffnung 20 hin so weit eingerollt, daß er in dem Innenraum einer für ihn vorgesehenen Aufnahme untergebracht werden kann.

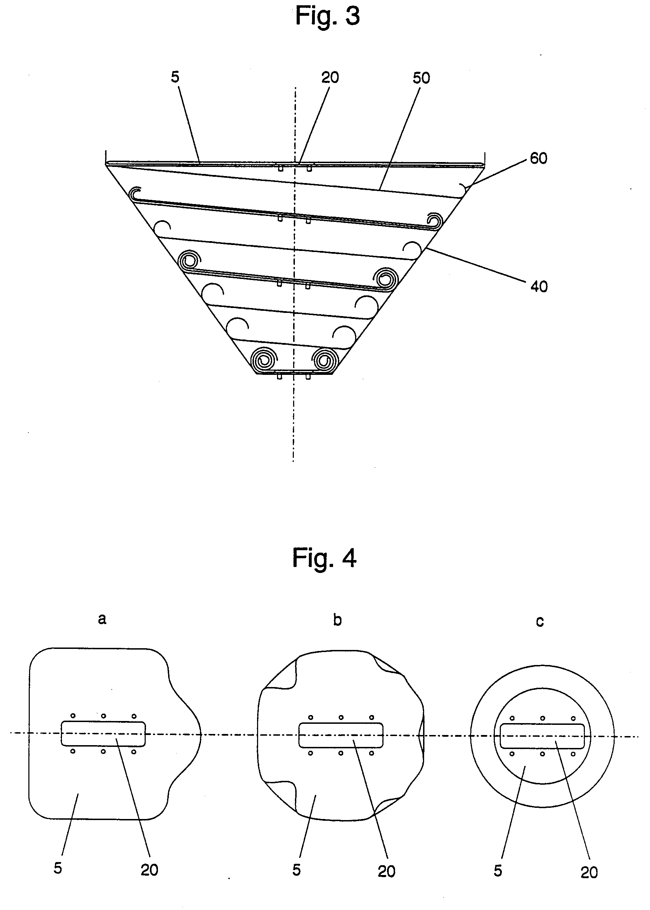

Dieses Einrollen kann in einer Einrollvorrichtung erfolgen, die schematisch in Fig. 3 dargestellt ist. Diese Einrollvorrichtung umfaßt einen Führungstrichter 40 sowie eine (nicht dargestellte) Vorschubeinrichtung für den Gassack 5. Der Führungstrichter 40 weist die Gestalt eines Kegelstumpfes auf und ist auf seiner Innenseite mit einer Auflage 50 versehen, die sich nach Art eines Gewindeganges entlang der Innenseite des Führungstrichters 40 erstreckt. Am Übergang zwischen der Auflage 50 und der Innenseite des Führungstrichters 40 ist ein Fortsatz 60 angeordnet, der sich derart von dem Übergang zurück über die Auflage 50 erstreckt, daß im Bereich des Überganges einen Formgebungsabschnitt für die eingerollten Wandungsabschnitte des Gassackes 5 gebildet ist. Da sich die Auflage 50 nach Art eines Gewindeganges entlang der Innenseite des Führungstrichters 40 erstreckt, erstreckt sich folglich auch der aus dem Fortsatz 60 gebildete Formgebungsabschnitt nach Art eines Gewindeganges entlang der Innenseite des Führungstrichters 40. Entlang der Mittelachse des Führungstrichters 40 ist ein ausreichender Raum ausgespart, so daß sich die Vorschubeinrichtung entlang der Mittelachse bewegen kann.

Das erfindungsgemäße Verfahren kann wie folgt ausgeführt werden (siehe insbesondere Fig. 3, in der ein Gassack 5 in mehreren Stufen eines Einrollvorganges dargestellt ist): Der Gassack 5 wird durch eine Relativdrehung zwischen dem Gassack 5 (und der mit ihm verbundenen Vorschubeinrichtung) und dem Führungstrichter 40 von dem Eintrittsende des Führungstrichters 40 axial zu seinem Austrittsende befördert. Dabei wird die ausgebreitet gehaltene Wandung an ihrem Außenumfang beginnend einwärts zur Einlaßöffnung hin eingerollt.

Die Einrollbewegung ergibt sich durch ein geeignetes Zusammenspiel von Gewindesteigung, relativer Drehgeschwindigkeit zwischen Führungstrichter 40 und Gassack 5 sowie durch die geeignete Nachführung der Vorschubeinrichtung.

Während in den Fig. 1 und 2 verschiedene Einrollzustände eines Gassackes erster Art mit im ausgebreiteten Zustand kreisförmiger Gestalt dargestellt ist, kann mit dem erfindungsgemäßen Verfahren auch eine Gassack zweiter Art eingerollt werden, dessen Gestalt von der Kreisform abweicht. Ein solcher Gassack 15 mit einer Einlaßöffnung 20 ist in Fig. 4a in dem ausgebreiteten Zustand dargestellt. Auch bei dieser Form wird das erfindungsgemäße Verfahren in der oben beschriebenen Weise durchgeführt, wobei zuerst die im ausgebreiteten Zustand eine von der Kreisform abweichende Umfangskontur aufweisende Wandung vor Beginn der Einrollbewegung durch partielles Einrollen des Umfangsrandes auf eine angenähert kreisförmige Umfangskontur gebracht wird.

Es kann vorgesehen sein, daß die Wandung des gerollten Gassackes im Anschluß an das Einrollen zumindest partiell nachgerollt wird.

Nach Beendigung des Einrollvorganges kann der eingerollte Gassack in einer zu seiner Anbringung vorgesehenen Aufnahme abgelegt werden, so daß er sich nicht wieder entrollen kann.

Das erfindungsgemäße Verfahren weist insbesondere den Vorteil auf, daß die zum Ausführen des Einrollens eines Gassackes notwendige Bearbeitungszeit auf eine Zeitdauer in der Größenordnung von fünf Sekunden vermindert wird.

Ein durch das erfindungsgemäße Verfahren eingerollter Gassack weist den Vorteil auf, daß im Gegensatz zu einem nach dem Stand der Technik gefalteten Gassack, bei dem sich ein wesentlicher Teil der Wandung vor der Einlaßöffnung befindet und somit bei Füllen des Gassackes von dem Gasdruck im Inneren des Gassackes von der Einlaßöffnung wegbewegt werden muß, bei dem erfindungsgemäßen Gassack der wesentliche Teil der Wandung um die Einlaßöffnung 20 herum angeordnet ist, so daß der zum Entfalten des Gassackes in diesen einströmende Gasstrom nicht zuerst durch den Großteil der vor der Einlaßöffnung 20 liegenden Wandung gebremst wird.

Im Gegensatz zu einem nach dem Stand der Technik gefalteten Gassack, der sich beim Füllen gemäß der beim Falten durchgeführten vielen Faltschritte entfalten muß, entfaltet sich ein erfindungsgemäßer Gassack dadurch, daß die beim Einrollen erfolgte Verdrehung von Wandungsabschnitten durch eine Drehung in entgegengesetzter Richtung aufgelöst wird. Dies ermöglicht ein leichteres Entfalten des Gassackes.

Die erfindungsgemäße Vorrichtung weist schließlich den Vorteil auf, daß die von ihr auszuführende Bewegung, die im wesentlichen nur eine Drehbewegung ist, sehr viel leichter auszuführen ist als die komplizierten Faltbewegungen der Vorrichtungen nach dem Stand der Technik.

Während bei der Darstellung in Fig. 1 der Gassack nach oben gerollt wird, ist bei einer Variante des Verfahrens vorgesehen, ihn nach unten einzurollen. Ferner kann die Einrollung durch verschiedene Maßnahmen fixiert werden, insbesondere durch Bügeln, evtl. mit Dampfunterstützung, oder durch Niederhalterollen, die am gesamten Außenumfang angreifen.

## Patentansprüche

1. Verfahren zum Überführen eines Gassackes (5) für ein Fahrzeuginsassen-Rückhaltesystem, der im aufgeblasenen Zustand eine dreidimensionale Form aufweist und dessen eine Einlaßöffnung (20) aufweisende Wandung im entleerten Zustand flach ausgebreitet werden kann, in eine an den Innenraum einer für ihn vorgesehenen Aufnahme angepaßte Form, dadurch gekennzeichnet, daß die ausgebreitet gehaltene Wandung an ihrem gesamten Außenumfang beginnend einwärts zur Einlaßöffnung (20) hin eingerollt wird.

2. Verfahren nach Anspruch 1, dadurch gekennzeichnet, daß die Einrollbewegung im wesentlichen parallel zur Ebene der ausgebreiteten Wandung erfolgt.

3. Verfahren nach Anspruch 2, dadurch gekennzeichnet, daß die Einrollbewegung an einer Umfangsstelle der ausgebreiteten Wandung beginnend im wesentlichen entlang einer Spirallinie fortschreitet.

4. Verfahren nach Anspruch 2, dadurch gekennzeichnet, daß die Einrollbewegung am gesamten Außenumfang beginnend gleichmäßig einwärts fortschreitet.

5. Verfahren nach einem der vorhergehenden Ansprüche, dadurch gekennzeichnet, daß die Wandung im Anschluß an das Einrollen zumindest partiell nachgerollt wird.

6. Verfahren nach einem der vorhergehenden Ansprüche, dadurch gekennzeichnet, daß der im ausgebreiteten Zustand eine von der Kreisform abweichende Umfangskontur aufweisenden Wandung vor Beginn der Einrollbewegung durch partielles Einrollen des Umfangsrandes eine angenähert kreisförmige Umfangskontur gegeben wird.

7. Verfahren nach einem der vorhergehenden Ansprüche, dadurch gekennzeichnet, daß der eingerollte Gassack (5) in einer Aufnahme abgelegt wird, so daß er sich nicht wieder entrollen kann.

8. Vorrichtung zum Überführen eines Gassackes (5) für ein Fahrzeuginsassen-Rückhaltesystem, der im aufgeblasenen Zustand eine dreidimensionale Form aufweist und dessen eine Einlaßöffnung (20) aufweisende Wandung im entleerten Zustand flach ausgebreitet werden kann, in eine an den Innenraum einer Aufnahme angepaßte Form, gekennzeichnet durch eine am Außenumfang der Wandung angreifende Einrolleinrichtung, welche die ausgebreitet gehaltene Wandung entlang der Innenfläche eines Führungstrichters zur Einlaßöffnung (20) hin einrollt, und eine Vorschubeinrichtung, welche die Wandung vom Eintrittsende des Führungstrichters axial zu seinem Austrittsende befördert.

9. Gassack für ein Fahrzeuginsassen-Rückhaltesystem, der im aufgeblasenen Zustand eine dreidimensionale Form aufweist, dessen eine Einlaßöffnung (20) aufweisende Wandung im entleerten Zustand flach ausgebreitet werden kann und der in eine an den Innenraum einer Aufnahme angepaßte Form überführt ist, dadurch gekennzeichnet, daß die Wandung ausgehend von ihrem Außenumfang im ausgebreiteten Zustand entlang dem gesamten Außenumfang bis zur Berandung der Einlaßöffnung (20) eingerollt ist.

## Claims

1. A method of transferring a gas bag (5) for a vehicle occupant restraint system which in the inflated condition is three-dimensional in shape and the wall of which featuring an inflation port (20) may be spread out flat in the deflated condition, into a shape adapted to the interior space afforded by a receiving compartment, characterized in that the wall held spread-out is rolled up inwardly towards the inflation port (20), beginning at its entire outer periphery.

2. The method as set forth in claim 1, characterized in that the rolling-up movement is oriented substantially parallel to the plane of the spread-out wall.

3. The method as set forth in claim 2, characterized in that the rolling-up movement commences at a peripheral location of the spread-out wall and progresses substantially along a spiral path.

4. The method as set forth in claim 2, characterized in that the rolling-up movement commences at the entire outer periphery and progresses uniformly inwards.

5. The method as set forth in any of the preceding claims, characterized in that the wall is re-rolled at least partially after having been rolled up.

6. The method as set forth in any of the preceding claims, characterized in that the wall having in the spread-out condition a peripheral contour other than circular is given a more or less circular peripheral contour by partial rolling up of the peripheral edge before the rolling-up movement is commenced.

7. The method as set forth in any of the preceding claims, characterized in that the rolled-up gas bag (5) is deposited in a receiving compartment so that it is prevented from unrolling again.

8. A device for transferring a gas bag (5) for a vehicle occupant restraint system which in the inflated condition is three-dimensional in shape and the wall of which featuring an inflation port (20) may be spread out flat in the deflated condition, into a shape adapted to the interior space of a receiving compartment, characterized by a rolling-up means engaging the outer periphery of the wall, which rolls up the wall held spread-out along the internal surface of a guide funnel towards the inflation port (20), and a feeder means which feeds the wall from the inlet end of the guide funnel axially to its outlet end.

9. A gas bag for a vehicle occupant restraint system which in the inflated condition is three-dimensional in shape, the wall of which featuring an inflation port (20) may be spread out flat in the deflated condition, and which is transferred into a shape adapted to the interior space of a receiving compartment, characterized by the wall being rolled up along its entire outer periphery up to the rim of the inflation port (20), starting from its outer periphery in the spread-out condition.

## Revendications

1. Procédé pour faire prendre à un coussin gonflable (5) d'un système de retenue pour passagers d'un véhicule, qui présente une forme en trois dimensions quand il est gonflé et dont on peut déployer à plat une paroi présentant un orifice d'admission (20), quand il est vide, une forme adaptée à l'intérieur d'un réceptacle prévu pour lui, procédé caractérisé en ce que l'on enroule la paroi maintenue déployée en commençant sur tout son pourtour extérieur vers l'intérieur en direction de l'orifice d'admission (20).

2. Procédé selon la revendication 1, caractérisé en ce que le mouvement d'enroulement a lieu de façon sensiblement parallèle au plan de la paroi déployée.

3. Procédé selon la revendication 2, caractérisé en ce que le mouvement d'enroulement, en commençant en un point du pourtour de la paroi déployée, se poursuit essentiellement le long d'une ligne en forme de spirale.

4. Procédé selon la revendication 2, caractérisé en ce que le mouvement d'enroulement, en commençant sur tout le pourtour extérieur, se poursuit régulièrement vers l'intérieur.

5. Procédé selon l'une des revendications précédentes, caractérisé en ce que la paroi, à la suite de l'enroulement, est roulée au moins partiellement après coup.

6. Procédé selon l'une des revendications précédentes, caractérisé en ce que l'on donne, avant le commencement du mouvement d'enroulement, un contour à peu près circulaire au pourtour de la paroi, qui présente un pourtour dont le contour s'écarte d'une forme circulaire quand elle est déployée, en enroulant partiellement le bord du pourtour.

7. Procédé selon l'une des revendications précédentes, caractérisé en ce que le coussin gonflable enroulé (5) est déposé dans un réceptacle de telle sorte qu'il ne puisse pas se dérouler à nouveau.

8. Dispositif pour faire prendre à un coussin gonflable (5) d'un système de retenue pour passagers d'un véhicule, qui présente une forme en trois dimensions quand il est gonflé, et dont on peut déployer à plat une paroi présentant un orifice d'admission (20), quand il est vide, une forme adaptée à l'intérieur d'un réceptacle, dispositif caractérisé par un système d'enroulement venant en prise sur le pourtour extérieur de la paroi, système qui enroule la paroi maintenue déployée le long de la surface intérieure d'un entonnoir de guidage vers l'orifice d'admission (20), et un dispositif d'avance qui transporte axialement la paroi de l'extrémité d'entrée de l'entonnoir de guidage vers son extrémité de sortie.

9. Coussin gonflable d'un système de retenue pour passagers d'un véhicule, qui présente une forme en trois dimensions quand il est gonflé, et dont on peut déployer à plat une paroi présentant un orifice d'admission (20), quand il est vide, et auquel on fait prendre une forme adaptée à l'intérieur d'un réceptacle, coussin gonflable caractérisé en ce que la paroi est enroulée, en partant de son pourtour extérieur quand elle est déployée, le long de tout le pourtour extérieur, jusqu'à ce qu'on arrive au bord de l'orifice d'admission (20).
